# EUROPEAN PATENT APPLICATION

(11) **EP 4 510 244 A1**
(43) Date of publication of application: **19.02.2025**
(21) Application number: 24779969.5
(22) Date of filing: 22.03.2024
(51) Int. Cl.: H01M 4/62, C08G 73/10, C08L 79/04, H01G 11/06, H01G 11/38

(54) **BINDER FOR POWER STORAGE DEVICE, ELECTRODE FOR POWER STORAGE DEVICE, POWER STORAGE DEVICE, POLYMER COMPOSITE, AND METHOD FOR MANUFACTURING BINDER FOR POWER STORAGE DEVICE**

(30) Priority: 31.03.2023 JP 2023059300
(71) Applicant: UBE Corporation, Ube-shi, Yamaguchi 755-8633 (JP)
(72) Inventor: MORIMOTO, Keisuke, Ube-shi, Yamaguchi 755-8633 (JP); IIZUMI, Nobu, Ube-shi, Yamaguchi 755-8633 (JP)
(74) Representative: Hoffmann Eitle
(86) International application number: PCT/JP2024/011300
(87) International publication number: WO 2024/203851

(57) **Abstract**

Provided is a binder for an energy storage device comprising a polymer composite formed by compositing a polyimide precursor and/or a polyimide with a cyclic molecule having a plurality of ether bonds. The polyimide precursor contains a reactant of a tetracarboxylic acid component and a diamine component. The polyimide is obtained by imidizing a part or all of the polyimide precursor.

## Description

### Technical Field

The present invention relates to a binder for an energy storage device that has excellent mechanical properties and can improve charge and discharge cycle characteristics, an electrode for an energy storage device obtained using the binder, an energy storage device, and a production method of the binder for an energy storage device. In addition, the present invention also relates to a polymer composite that has excellent mechanical properties.

### Background Art

Polyimides have excellent heat resistance, solvent resistance (chemical resistance), mechanical properties, electrical properties, and the like, and therefore, they are widely used for uses in electrical devices and electronic devices, such as flexible wiring boards and tape for tape automated bonding (TAB). For example, polyimides obtained from aromatic tetracarboxylic dianhydrides and aromatic diamines, especially polyimides obtained from 3,3',4,4'-biphenyltetracarboxylic dianhydrides and paraphenylenediamines, are suitably used.

Polyimides are also being studied for use as binders for energy storage devices, such as binders for electrodes of lithium-ion batteries. For example, Patent Document 1 discloses a binder for a lithium-ion battery electrode containing a polyimide precursor obtained using a predetermined aromatic tetracarboxylic dianhydride and a predetermined diamine, a polyimide or a polyamide imide, and a lithium salt. In addition, Patent Document 1 discloses that a negative electrode is obtained by mixing a polyamic acid obtained using an aromatic tetracarboxylic dianhydride and a diamine, and 12-crown-4 with a negative electrode active material.

### Prior Art Document

### Patent Document

Patent Document 1: JP-A-2013-89437

### Summary of Invention

### Problems to Be Solved by Invention

However, the binder for a lithium-ion battery electrode disclosed in Patent Document 1 does not have sufficient mechanical properties, and the effect of improving charge and discharge cycle characteristics is insufficient.

An object of the present invention is to provide a binder for an energy storage device that has excellent mechanical properties and can improve charge and discharge cycle characteristics.

### Means for Solving Problems

The inventors conducted a serious examination to solve the above-described problems and found that a binder containing a polymer composite formed by compositing a polyimide precursor with a cyclic molecule having a plurality of ether bonds has especially high breaking energy among the mechanical properties and can improve the charge and discharge cycle characteristics when it is applied to an energy storage device, leading to the completion of the present invention.

In other words, the present invention provides the following [1] to [11].
[1] A binder for an energy storage device comprising a polymer composite formed by compositing a polyimide precursor and/or a polyimide with a cyclic molecule having a plurality of ether bonds, the polyimide precursor containing a reactant of a tetracarboxylic acid component and a diamine component, the polyimide being obtained by imidizing a part or all of the polyimide precursor.
[2] The binder for an energy storage device according to [1], wherein the cyclic molecule is at least one kind selected from cyclodextrin, crown ether, and thiocrown ether.
[3] The binder for an energy storage device according to [1] or [2], wherein a proportion of the cyclic molecule contained in the binder is 4 mol% or more and 25 mol% or less relative to a total of 100 mol% of an amide acid group and an imide group contained in the polyimide precursor and/or the polyimide obtained by imidizing a part or all of the polyimide precursor.
[4] The binder for an energy storage device according to any one of [1] to [3], wherein a proportion of an alicyclic tetracarboxylic dianhydride in 100 mol% of the tetracarboxylic acid component is 35 mol% or more.
[5] The binder for an energy storage device according to any one of [1] to [4], wherein the polymer composite is prepared by reacting the tetracarboxylic acid component with the diamine component in presence of the cyclic molecule.
[6] A varnish comprising the binder for an energy storage device according to any one of [1] to [5].
[7] An electrode for an energy storage device comprising the binder for an energy storage device according to any one of [1] to [5] and an active material.
[8] The electrode for an energy storage device according to [7], wherein the active material is a silicon-containing negative electrode active material.
[9] An energy storage device comprising the electrode according to [7] or [8].
[10] A method for producing the binder for an energy storage device according to any one of [1] to [5], the production method comprising forming a polyimide precursor by reacting a tetracarboxylic acid component with a diamine component in presence of a cyclic molecule having a plurality of ether bonds.
[11] A polymer composite formed by compositing a polyimide precursor and/or a polyimide with a cyclic molecule having a plurality of ether bonds, the polyimide precursor containing a reactant of a tetracarboxylic acid component and a diamine component, the polyimide being obtained by imidizing a part or all of the polyimide precursor, wherein a proportion of an alicyclic tetracarboxylic dianhydride in 100 mol% of the tetracarboxylic acid component is 35 mol% or more.

### Effects of Invention

The present invention can provide a binder for an energy storage device that has excellent mechanical properties and can improve charge and discharge cycle characteristics, an electrode for an energy storage device obtained using the binder, an energy storage device, and a production method of the binder for an energy storage device. In addition, the present invention can also provide a polymer composite that has excellent mechanical properties.

### Brief Description of Drawings

[FIG. 1] FIG. 1 illustrates IR spectra for Example 1 and Comparative Example 2.
[FIG. 2] FIG. 2 illustrates IR spectra for Example 2 and Comparative Example 4.

### Mode(s) for Carrying out the Invention

### <Binder for energy storage device>

A binder for an energy storage device of the present invention is a binder used in an energy storage device. The binder contains a polymer composite formed by compositing a polyimide precursor and/or a polyimide with a cyclic molecule having a plurality of ether bonds (including one in which some or all of the ether bonds are thioether bonds, and the same applies hereafter). The polyimide precursor contains a reactant of a tetracarboxylic acid component and a diamine component. The polyimide is obtained by imidizing a part or all of the polyimide precursor.

First, the following describes a case where the polymer composite is formed by compositing the polyimide precursor containing a reactant of a tetracarboxylic acid component and a diamine component with the cyclic molecule having a plurality of ether bonds.

It is only necessary for the binder for an energy storage device of the present invention to contain a polyimide precursor containing a reactant of a tetracarboxylic acid component and a diamine component (hereinafter also simply referred to as a "polyimide precursor") and a cyclic molecule having a plurality of ether bonds (hereinafter also simply referred to as a "cyclic molecule"), which are in a state of forming a polymer composite by compositing at least a part of the polyimide precursor with at least a part of the cyclic molecule. That is, the binder for an energy storage device of the present invention may contain an uncomposited polyimide precursor and an uncomposited cyclic molecule in addition to a polyimide precursor and a cyclic molecule that are in a state of a polymer composite in which at least a part of the polyimide precursor and at least a part of the cyclic molecule are composited. Further, the binder for an energy storage device of the present invention may contain, in addition to the polyimide precursor, a polyimide obtained by imidizing a part or all of the polyimide precursor (that is, it may contain a partially imidized polyimide obtained by imidizing a part of an amic acid structure constituting the polyimide precursor, or a completely imidized polyimide obtained by imidizing all of the amic acid structure constituting the polyimide precursor).

In the present invention, the polyimide precursor and the cyclic molecule being composited need only be a polyimide precursor and a cyclic molecule being physically or chemically composited. For example, they mean a state in which a 10% by weight or more cyclic molecule of the whole amount 100% by weight of the cyclic molecule contained in the binder for an energy storage device of the present invention remains without volatilizing even when the binder for an energy storage device of the present invention is heated at a temperature higher than the boiling point of the cyclic molecule by 50°C or more (that is, (the boiling point of the cyclic molecule + 50)°C or more) for 5 minutes or more (more specifically, when it is heated at 350°C for 5 minutes or more). For example, when 18-crown-6 (boiling point: 190°C) is contained as the cyclic molecule, the polyimide precursor and the cyclic molecule being composited mean a state in which 10% by weight or more 18-crown-6 of the whole amount 100% by weight of the 18-crown-6 contained in the binder for an energy storage device remains without volatilizing when the binder is heated up from room temperature at a constant rate and then heated at a temperature of 240°C or more for 5 minutes or more (more specifically, when it is heated at 350°C for 5 minutes or more). When the binder for an energy storage device of the present invention is heated at a temperature of (the boiling point of the cyclic molecule + 50)°C or more for 5 minutes or more, the amount of the cyclic molecule remaining without volatilizing is preferably 15% by weight to 100% by weight, and more preferably 20% by weight to 100% by weight of the whole amount 100% by weight of the cyclic molecule contained in the binder for an energy storage device of the present invention. The above measurement may be performed in a state of varnish in which the binder for an energy storage device of the present invention is dissolved or dispersed in a solvent. In addition, in the present invention, at least a part of the polyimide precursor and at least a part of the cyclic molecule may be composited by constituting a rotaxane structure. Depending on the type of the cyclic molecule, it contains components that become carbonized without being composited in addition to components that volatilize when the binder is heated at a temperature of (the boiling point of the cyclic molecule + 50)°C or more for 5 minutes or more in some cases. In such cases, the proportion of the components that become carbonized when the cyclic molecule is heated alone may be obtained in advance, and the amount obtained by subtracting the amount of the carbonized components may be interpreted as the amount of the cyclic molecule that remains without volatilizing. For example, since α-cyclodextrin has components that become carbonized in a proportion of about 10% by weight, this value may be subtracted.

The reason why the breaking energy is high and the charge and discharge cycle characteristics can be improved by compositing at least a part of the polyimide precursor with at least a part of the cyclic molecule in the present invention is not necessarily apparent. However, it is considered that this is because these being composited can increase the strength while maintaining high flexibility, thereby effectively demonstrating follow-up or relaxation action on expansion and contraction caused by charging and discharging of active materials used in an energy storage device.

The polyimide precursor is prepared by reacting a tetracarboxylic acid component with a diamine component, thereby forming an amide bond (-CONH-). The polyimide precursor preferably contains a repeating unit represented by Formula (1) below and is more preferably 50 mol% or more, further preferably 75 mol% or more, and still more preferably 90 mol% or more.

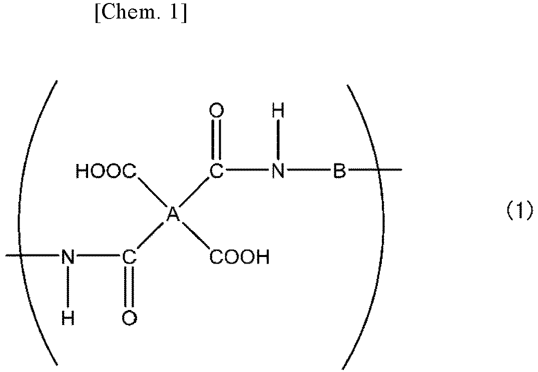

In the above Formula (1), A is one kind or at least two kinds selected from tetravalent groups in which carboxyl groups are removed from an aromatic tetracarboxylic acid or an aliphatic tetracarboxylic acid, and B is one kind or at least two kinds selected from divalent groups in which amino groups are removed from an aromatic diamine or an aliphatic diamine.

Examples of the tetracarboxylic acid component include aromatic tetracarboxylic dianhydrides, aliphatic tetracarboxylic dianhydrides, or the like. These can be used alone, or two or more kinds can be used in combination.

As the aromatic tetracarboxylic dianhydride, a tetracarboxylic dianhydride having an aromatic ring can be suitably used. Specific examples of the aromatic tetracarboxylic dianhydride include 3,3',4,4'-biphenyltetracarboxylic dianhydride (s-BPDA), pyromellitic dianhydride (hereinafter also referred to as "PMDA"), 2,3,3',4'-biphenyltetracarboxylic dianhydride, 4,4'-oxydiphthalic dianhydride, diphenylsulfone-3,4,3',4'-tetracarboxylic dianhydride, bis(3,4-dicarboxyphenyl)sulfide dianhydride, 2,2-bis(3,4-dicarboxyphenyl)-1,1,1,3,3,3-hexafluoropropane dianhydride (another name: 4,4'-(hexafluoroisopropylidene)diphthalic anhydride), 2,3,3',4'-benzophenonetetracarboxylic dianhydride, 3,3',4,4'-benzophenonetetracarboxylic dianhydride, bis(3,4-dicarboxyphenyl)methane dianhydride, 2,2-bis(3,4-dicarboxyphenyl)propane dianhydride, p-phenylenebis(trimellitic acid monoester acid anhydride), p-biphenylenebis(trimellitic acid monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride, 2,3,6,7-naphthalenetetracarboxylic dianhydride, 1,4,5,8-naphthalenetetracarboxylic dianhydride, 4,4'-(2,2-hexafluoroisopropylidene)diphthalic dianhydride, and the like. These can be used alone, or a mixture of two or more kinds can be used.

As the aliphatic tetracarboxylic dianhydride, an alicyclic tetracarboxylic dianhydride (a tetracarboxylic dianhydride that has an alicyclic structure and does not have an aromatic ring) can be suitably used. Specific examples of the alicyclic tetracarboxylic dianhydride include (1R,2S,4S,SR)-cyclohexanetetracarboxylic dianhydride (hereinafter also referred to as "H"-PMDA"), (1S,2R,4S,5R)-cyclohexanetetracarboxylic dianhydride, (1S,2S,4R,5R)-cyclohexanetetracarboxylic dianhydride (hereinafter also referred to as "H'-PMDA"), bicyclo[2.2.2]octane-2,3,5,6-tetracarboxylic dianhydride, bicyclo[2.2.2]oct-7-ene-2,3,5,6-tetracarboxylic dianhydride (hereinafter also referred to as "BTA"), 4-(2,5-dioxotetrahydrofuran-3-yl)-tetralin-1,2-dicarboxylic anhydride, tetrahydrofuran-2,3,4,5-tetracarboxylic dianhydride, bicyclo-3,3',4,4'-tetracarboxylic dianhydride, 1,2,3,4-cyclopentanetetracarboxylic dianhydride, 1,2,3,4-cyclobutanetetracarboxylic dianhydride (hereinafter also referred to as "CBDA"), 1,3-dimethyl-1,2,3,4-cyclobutanetetracarboxylic dianhydride, 1,4-dimethyl-1,2,3,4-cyclobutanetetracarboxylic dianhydride, 1,2,3,4-cyclohexanetetracarboxylic dianhydride, pentacyclo[8.2.1.1^{4,7}.0^{2,9}.0^{3,8} ]tetradecane-5,6,11,12-tetracarboxylic dianhydride, 5-(2,5-dioxotetrahydrofuryl)-3-methyl-3-cyclohexene-1,2-dicarboxylic anhydride, cyclohex-1-ene-2,3,5,6-tetracarboxylic dianhydride, bicyclo[2.2.1]heptane-2,3,5,6-tetracarboxylic dianhydride, and the like. These can be used alone, or a mixture of two or more kinds can be used.

In the present invention, from the viewpoint of further enhancing the breaking energy and from the viewpoint of further increasing the effect of improving the charge and discharge cycle characteristics and charge and discharge characteristics, such as coulombic efficiency, at least the alicyclic tetracarboxylic dianhydride is preferably used as the tetracarboxylic acid component. The proportion of the alicyclic tetracarboxylic dianhydride in 100 mol% of the tetracarboxylic acid component is preferably 35 mol% or more, the proportion of the alicyclic tetracarboxylic dianhydride is more preferably 50 mol% or more, and the proportion of the alicyclic tetracarboxylic dianhydride is further preferably 70 mol% or more. The proportion of the alicyclic tetracarboxylic dianhydride is still more preferably 90 mol% or more, and the proportion of the alicyclic tetracarboxylic dianhydride is particularly preferably 100 mol%.

From the viewpoint of increasing the effect of improving the charge and discharge cycle characteristics and the charge and discharge characteristics, such as coulombic efficiency, as the alicyclic tetracarboxylic dianhydride, H"-PMDA, CBDA, norbornane-2-spiro-α-cyclopentanone-α'-spiro-2"-norbornane-5,5",6,6"-tetracarboxylic dianhydride (CpODA), [1,1'-bi(cyclohexane)]-3,3',4,4'-tetracarboxylic acid (H-BPDA), H"-PMDA, and BTA are preferred. Since the effect of improving the charge and discharge cycle characteristics is further increased, H"-PMDA and CBDA are more preferred. In addition, as the aromatic tetracarboxylic dianhydride, s-BPDA and PMDA are preferred, and PMDA is more preferred since the effect of improving the charge and discharge cycle characteristics is further increased.

Examples of diamine compounds as the diamine component include aromatic diamines having an aromatic group, such as 4,4'-diaminodiphenyl ether (hereinafter also referred to as "ODA"), 2,2'-dimethylbenzidine, 4,4'-diaminodiphenylmethane, 4,4'-diamino-1,2-diphenylethane, p-phenylenediamine (PPD), m-phenylenediamine, 2,4-diaminotoluene, 1,3-bis(4-aminophenoxy)benzene (hereinafter also referred to as "TPE-R"), 1,4-bis(4-aminophenoxy)benzene, 2,2-bis[4-(4-aminophenoxy)phenyl]propane, m-xylylenediamine, p-xylylenediamine, 2,2-bis[4-(4-aminophenoxy)phenyl]propane, 4,4'-methylenebis(2,6-xylidine), α,α'-bis(4-aminophenyl)-1,4-diisopropylbenzene, 2,2'-dimethyl-4,4'-aminobiphenyl, 3,3'-dimethyl-4,4'-aminobiphenyl, 2,2'-ethylenedianiline, and 4,4'-diaminobenzanilide (hereinafter also referred to as "DABAN"); alicyclic diamines having an alicyclic structure, such as 1,4-diaminocyclohexane, 1,4-diamino-2-methylcyclohexane, 1,4-diamino-2-ethylcyclohexane, 1,4-diamino-2-n-propylcyclohexane, 1,4-diamino-2-isopropylcyclohexane, 1,4-diamino-2-n-butylcyclohexane, 1,4-diamino-2-isobutylcyclohexane, 1,4-diamino-2-sec-butylcyclohexane, 1,4-diamino-2-tert-butylcyclohexane, 1,2-diaminocyclohexane, 1,3-diaminocyclobutane, 1,4-bis(aminomethyl)cyclohexane, 1,3-bis(aminomethyl)cyclohexane, diaminobicycloheptane, diaminomethylbicycloheptane, diaminooxybicycloheptane, diaminomethyloxybicycloheptane, isophoronediamine, diaminotricyclodecane, diaminomethyltricyclodecane, bis(aminocyclohexyl)methane, bis(aminocyclohexyl)isopropylidene, 6,6'-bis(3-aminophenoxy)-3,3,3',3'-tetramethyl-1,1'-spirobiindane, and 6,6'-bis(4-aminophenoxy)-3,3,3',3'-tetramethyl-1,1'-spirobiindane; fluorine-based diamines containing a fluorine atom, such as 2,2'-bis(trifluoromethyl)-4,4'-diaminobiphenyl, 2,2'-bis(3-amino-4-hydroxyphenyl)hexafluoropropane, 2,3,5,6-tetrafluoro-1,4-diaminobenzene, 2,4,5,6-tetrafluoro-1,3-diaminobenzene, 2,3,5,6-tetrafluoro-1,4-benzene (dimethanamine), 2,2'-difluoro-(1,1'-biphenyl)-4,4'-diamine, 2,2',6,6'-tetrafluoro-(1,1'-biphenyl)-4,4'-diamine, 4,4'-diaminooctafluorobiphenyl, 2,2-bis(4-aminophenyl)hexafluoropropane, 4,4'-oxybis(2,3,5,6-tetrafluoroaniline), 3,3'-bis(trifluoromethyl)-4,4'-diaminobiphenyl, 4,4'-diamino-2,2'-bis(trifluoromethyl)diphenyl ether, 1,4-bis[4-amino-2-(trifluoromethyl)phenoxy]benzene, 2,2-bis[4-[4-amino-2-(trifluoromethyl)phenoxy]hexafluoropropane, 3,5-diaminobenzene trifluoride, and 4,4-diamino-2-(trifluoromethyl)diphenyl ether; ester bond-containing diamines, such as 4-aminophenyl 4-aminobenzoate and bis(4-aminophenyl) terephthalate; and the like. These can be used alone, or a mixture of two or more kinds can be used.

From the viewpoint of increasing the effect of improving the charge and discharge cycle characteristics and the charge and discharge characteristics, such as coulombic efficiency, as the diamine compound as the diamine component, ODA, TPE-R, and DABAN are preferred, and containing ODA alone or combining ODA with TPE-R or DABAN is further preferred.

The cyclic molecule need only be a compound having a plurality of ether bonds and a cyclic molecular structure and is not particularly limited. However, from the viewpoint of further enhancing the breaking energy and from the viewpoint of further increasing the effect of improving the charge and discharge cycle characteristics, at least one kind selected from cyclodextrin, crown ether, and thiocrown ether is preferred, cyclodextrin or crown ether is more preferred, and crown ether is further preferred. Examples of the cyclodextrin include α-cyclodextrin, β-cyclodextrin, γ-cyclodextrin, and the like, and examples of the crown ether include 12-crown-4, 15-crown-5, 18-crown-6, dibenzo-18-crown-6, diaza-18-crown-6, and the like. Among these, 18-crown-6 is suitable from the viewpoint of its high advantage in effects.

The proportion of the cyclic molecule contained in the binder for an energy storage device of the present invention is preferably 4 mol% or more and 25 mol% or less relative to a total of 100 mol% of amide acid groups and imide groups contained in the polyimide precursor and/or the polyimide obtained by imidizing a part or all of the polyimide precursor, more preferably 10 mol% or more, and more preferably 20 mol% or less. In addition, the proportion of the cyclic molecule contained in the binder for an energy storage device of the present invention in the weight equivalent is preferably 5% by weight or more and 25% by weight or less in a total of 100% by weight of the polyimide precursor and the cyclic molecule, more preferably 10% by weight or more, and more preferably 20% by weight or less.

### <Method for producing binder for energy storage device>

The binder for an energy storage device of the present invention includes a step of forming a polyimide precursor by reacting a tetracarboxylic acid component with a diamine component in the presence of a cyclic molecule, thereby forming an amide bond.

According to the present invention, when the tetracarboxylic acid component is reacted with the diamine component, the cyclic molecule is caused to be present, thereby allowing at least a part of the polyimide precursor and at least a part of the cyclic molecule to be composited. This can bring a state of a polymer composite in which they are composited.

Although the method of reacting the tetracarboxylic acid component with the diamine component in the presence of the cyclic molecule is not particularly limited, the reactant can be obtained in a state where the polymer composite is dissolved in a solvent, that is, in a polymer composite solution state, for example, by reacting substantially equimolar amounts of the tetracarboxylic acid component and the diamine component in the solvent in the presence of the cyclic molecule at a relatively low temperature of 100°C or less, preferably 80°C or less to avoid progress or excessive progress of an imidization reaction. In addition to a polyamic acid as the polyimide precursor, a polyimide formed by the progress of the imidization reaction may be contained in the polymer composite solution prepared in this way. At this time, the polyimide may be one obtained by imidizing a part of the amic acid structure of the polyimide precursor or one obtained by imidizing all of the amic acid structure of the polyimide precursor. In addition, in this case, in addition to at least a part of the polyimide precursor, at least a part of the polyimide may be composited with the cyclic molecule.

The polymerization temperature in preparation of the polyimide precursor is preferably 25°C or more and 100°C or less, more preferably 40°C or more and 80°C or less, and further preferably 50°C or more and 80°C or less. The polymerization time is preferably 0.1 hours or more and 24 hours or less, and more preferably 2 hours or more and 12 hours or less. By controlling the polymerization temperature and the polymerization time within the ranges above, a high molecular weight polyimide precursor can be easily prepared with high production efficiency. Although polymerization can also be performed under an air atmosphere, polymerization is suitably performed usually under an atmosphere of an inert gas, preferably a nitrogen gas. The expression "substantially equimolar amounts of the tetracarboxylic acid component and the diamine component" specifically indicates that the molar ratio of these [the total tetracarboxylic acid components/the total diamine components] is 0.90 or more and 1.10 or less, preferably 0.95 or more and 1.05 or less, more preferably more than 0.98 and 1.04 or less, and further preferably more than 0.98 and 1.03 or less. In this specification, "approximately equivalent mole" means the molar ratio in the range of more than 0.99 to 1.01, and "equivalent mole" means the effective numeral of the molar ratio of 1.00.

When the tetracarboxylic acid component is reacted with the diamine component in the presence of the cyclic molecule, usually, a method of adding the cyclic molecule and the diamine component to a polymerization apparatus containing a solvent, confirming that the cyclic molecule and the diamine component are dissolved, and then adding the tetracarboxylic acid component can be suitably employed.

The solvent used when the tetracarboxylic acid component is reacted with the diamine component in the presence of the cyclic molecule can be any solvent that enables polymerization of the polyimide precursor and can dissolve the polyimide precursor, and may be either a water solvent or an organic solvent. The solvent may be a mixture of two or more solvents, and a mixed solvent of two or more organic solvents or a mixed solvent of water and one or more organic solvents can also be used. Examples of the organic solvents include, but not particularly limited to, N,N-dimethylformamide, N,N-dimethylacetamide, N,N-diethylacetamide, **N-methyl-2-pyrrolidone, N-ethyl-2-pyrrolidone,** 1,3-dimethyl-2-imidazolidinone, N-methylcaprolactam, hexamethylphosphorotriamide, 1,2-dimethoxyethane, bis(2-methoxyethyl)ether, 1,2-bis(2-methoxyethoxy)ethane, tetrahydrofuran, bis[2-(2-methoxyethoxy)ethyl]ether, 1,4-dioxane, dimethyl sulfoxide, dimethyl sulfone, diphenyl ether, sulfolane, diphenylsulfone, tetramethyl urea, anisole, m-cresol, phenol, γ-butyrolactone, and the like.

The binder for an energy storage device of the present invention can be produced by removing the solvent used for the polymerization from the polymer composite solution prepared as described above. Examples of the method of removing the solvent include, but not particularly limited to, a method of drying the solvent and the like. The binder for an energy storage device of the present invention may be in a state of varnish containing the binder for an energy storage device by dissolving or dispersing it in the solvent. As the solvent constituting the varnish of the binder for an energy storage device, the solvent used for the polymerization of the polyimide precursor in the presence of the cyclic molecule may be directly used as the solvent of the varnish of the binder for an energy storage device, or a solvent different from the solvent used for the polymerization may be used. When a solvent different from the solvent used for the polymerization is used, the solvent used for the polymerization may be removed by, for example, drying and then dissolved or dispersed in another solvent or substituted with another solvent.

Although the solids concentration of the polymer composite in the varnish of the binder for an energy storage device is not particularly limited, it is preferably 5% by mass or more and 45% by mass or less, more preferably 5% by mass or more and 40% by mass or less, and further preferably more than 10% by mass and 30% by mass or less relative to the total amount of the polymer composite and the solvent.

The varnish of the binder for an energy storage device may contain known additives, such as an amine compound, an additive for promoting the imidization reaction, such as a dehydrating agent, an organic phosphorus-containing compound, a filler, a surfactant, a silane coupling agent, and a leveling agent, as needed.

Examples of the amine compound include substituted or non-substituted nitrogen-containing heterocyclic compounds, N-oxide compounds of the nitrogen-containing heterocyclic compounds, substituted or non-substituted amino acid compounds, aromatic hydrocarbon compounds or aromatic heterocyclic compounds having a hydroxyl group, and the like. Specific examples of imidization catalysts include imidazole derivatives such as 1,2-dimethylimidazole, N-methylimidazole, 2-methylimidazole, 2-ethyl-4-methylimidazole, 5-methylbenzimidazole, and N-benzyl-2-methylimidazole; substituted pyridine derivatives such as isoquinoline, 3,5-dimethylpyridine, 3,4-dimethylpyridine, 2,5-dimethylpyridine, 2,4-dimethylpyridine, and 4-n-propylpyridine; and the like. The amount of the imidization catalyst to be used is preferably 0.01 equivalents or more and 2 equivalents or less, more preferably 0.02 equivalents or more, and more preferably 1 equivalent or less relative to amide acid units of the polyamide precursor. Use of the imidization catalyst may improve the physical properties of the binder for an energy storage device to be obtained, particularly elongation or end tear resistance.

Examples of other amine compounds include aliphatic tertiary amines such as trimethylamine and triethylenediamine; aromatic tertiary amines such as dimethylaniline; heterocyclic tertiary amines such as isoquinoline, pyridine, α-picoline, and β-picoline; and the like, and these can be added as needed.

Examples of the dehydrating agent include aliphatic carboxylic anhydrides such as acetic anhydride, propionic anhydride, and butyric anhydride; aromatic carboxylic anhydrides such as benzoic anhydride; and the like.

Examples of the organic phosphorus-containing compound include phosphoric acid esters such as monocaproyl phosphoric acid ester, monooctyl phosphoric acid ester, monolauryl phosphoric acid ester, monomyristyl phosphoric acid ester, monocetyl phosphoric acid ester, monostearyl phosphoric acid ester, monophosphoric acid ester of triethylene glycol monotridecyl ether, monophosphoric acid ester of tetraethylene glycol monolauryl ether, monophosphoric acid ester of diethylene glycol monostearyl ether, dicaproyl phosphoric acid ester, dioctyl phosphoric acid ester, dicapryl phosphoric acid ester, dilauryl phosphoric acid ester, dimyristyl phosphoric acid ester, dicetyl phosphoric acid ester, distearyl phosphoric acid ester, diphosphoric acid ester of tetraethylene glycol mononeopentyl ether, diphosphoric acid ester of triethylene glycol monotridecyl ether, diphosphoric acid ester of tetraethylene glycol monolauryl ether, and diphosphoric acid ester of diethylene glycol monostearyl ether; and amine salts of these phosphoric acid esters. Examples of the amine include ammonia, monomethylamine, monoethylamine, monopropylamine, monobutylamine, dimethylamine, diethylamine, dipropylamine, dibutylamine, trimethylamine, triethylamine, tripropylamine, tributylamine, monoethanolamine, diethanolamine, triethanolamine, and the like.

In the present invention, the polyimide precursor contained in the polymer composite constituting the binder for an energy storage device may be imidized, thereby preparing the polymer composite formed by compositing the polyimide with a cyclic molecule having a plurality of ether bonds. The polyimide is obtained by imidizing the polyimide precursor containing the reactant of the tetracarboxylic acid component and the diamine component. In this case, it is only necessary to contain a polyimide and a cyclic molecule that are in a state of forming a polymer composite by compositing at least a part of the polyimide with at least a part of the cyclic molecule. That is, the binder for an energy storage device of the present invention may contain an uncomposited polyimide and an uncomposited cyclic molecule in addition to a polyimide and a cyclic molecule that are in a state of a polymer composite in which at least a part of the polyimide and at least a part of the cyclic molecule are composited.

As the polyimide, a polyimide containing a repeating unit represented by Formula (2) below is preferably used as a main component (50 mol% or more), and is more preferably 75 mol% or more, and further preferably 90 mol% or more. That is, the polyimide may be a partially imidized polyimide obtained by imidizing a part of the amic acid structure contained in the polyimide precursor, a completely imidized polyimide obtained by imidizing all of the amic acid structure contained in the polyimide precursor, or a mixture of them.

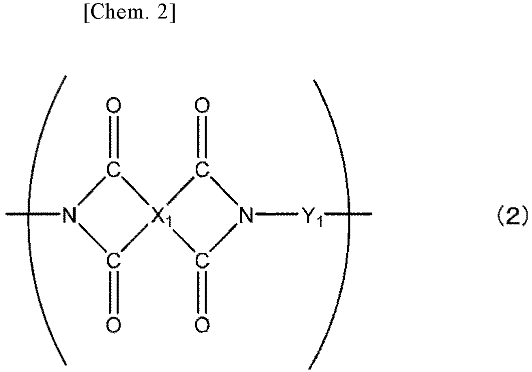

In the above Formula (2), X₁ is one kind or at least two kinds of tetravalent groups in which carboxyl groups are removed from an aromatic or aliphatic tetracarboxylic acid, and Y₁ is one kind or at least two kinds of divalent groups in which amino groups are removed from an aromatic or aliphatic diamine.

In the present invention, the polyimide and the cyclic molecule being composited need only be a polyimide and a cyclic molecule being physically or chemically composited. For example, they mean a state in which a 10% by weight or more cyclic molecule of the whole amount 100% by weight of the cyclic molecule contained in the binder for an energy storage device of the present invention remains without volatilizing even when the binder for an energy storage device of the present invention is heated at a temperature higher than the boiling point of the cyclic molecule by 50°C or more (that is, (the boiling point of the cyclic molecule + 50)°C or more) for 5 minutes or more (more specifically, when it is heated at 350°C for 5 minutes or more). When the binder for an energy storage device of the present invention is heated at a temperature of (the boiling point of the cyclic molecule + 50)°C or more for 5 minutes or more, the amount of the cyclic molecule remaining without volatilizing is preferably 15% by weight to 100% by weight, and more preferably 20% by weight to 100% by weight of the whole amount 100% by weight of the cyclic molecule contained in the binder for an energy storage device of the present invention. The above measurement may be performed in a state of varnish including the binder for an energy storage device of the present invention. In addition, in the present invention, at least a part of the polyimide and at least a part of the cyclic molecule may be composited by constituting a rotaxane structure.

Examples of the method of imidizing the polyimide precursor include, but not particularly limited to, a method of chemically imidizing or thermally imidizing the polymer composite containing the polyimide precursor and the cyclic molecule. Chemical imidization or thermal imidization may be performed in a state of a solution of the polymer composite containing the polyimide precursor and the cyclic molecule or may be performed in a state in which a solvent is removed by drying or the like.

In the present invention, the chemical imidization or thermal imidization can be performed by performing a heat treatment. Taking the thermal imidization as an example for explanation, the highest heating temperature in the heat treatment is generally 150°C or more, preferably 200°C or more, more preferably 250°C or more, and further preferably 350°C or more. The upper limit of the heat treatment temperature may be any temperature as long as it does not cause a reduction in properties, and is preferably 450°C or less, more preferably 430°C or less, and further preferably 400°C or less. Although the heat treatment can also be performed under an air atmosphere, usually, the heat treatment is suitably performed under an atmosphere of an inert gas, preferably a nitrogen gas. In the chemical imidization, the heat treatment can be performed on a condition milder than that for the thermal imidization although it depends on the type of an additive such as a chemical imidization catalyst. For example, it is only necessary to perform the heat treatment in the temperature range of generally 100°C or more, preferably 120°C or more, more preferably 150°C or more, further preferably 200°C or more, generally 360°C or less, preferably 300°C or less, more preferably 250°C or less, and further preferably 220°C or less.

The heat treatment for the chemical imidization or thermal imidization may be performed stepwise. For example, it is preferred that a first heat treatment be performed at a relatively low temperature of 100°C or more and 170°C or less for 0.5 minutes or more and 30 minutes or less, a second heat treatment be then performed at a temperature of more than 170°C and 220°C or less for 0.5 minutes or more and 30 minutes or less, and subsequently, a third heat treatment be performed at a high temperature of more than 220°C and less than 350°C for 0.5 minutes or more and 30 minutes or less. Further, a fourth high-temperature heat treatment can be performed at 350°C or more to the highest heating temperature. It is preferred that the heat treatment be continuously performed. For example, the heat treatment is preferably performed from a relatively low temperature of 100°C or more and 170°C or less to the highest heating temperature. Although the heating rate is not particularly limited, the heating rate is preferably 1°C/min or more and 30°C/min or less, and particularly preferably 2°C/min or more and 20°C/min or less. The ranges above are preferred because foaming caused by a rapid increase in temperature can be suppressed.

### <Electrode for energy storage device>

The electrode for an energy storage device of the present invention contains the binder for an energy storage device of the present invention described above and an active material. The active material may be any of a negative electrode active material and a positive electrode active material. That is, the electrode for an energy storage device of the present invention may be a negative electrode or a positive electrode.

When the electrode for an energy storage device of the present invention is a negative electrode, examples of the negative electrode active material, especially of the negative electrode active material for a lithium secondary battery, include carbon materials that can occlude and discharge lithium metal, lithium alloys, and lithium [such as easily graphitizable carbon, non-graphitizable carbon with spacing of (002) planes of 0.37 nm or more, and graphite with spacing of (002) planes of 0.34 nm or less], tin (elementary substance), tin compounds, silicon (elementary substance), silicon compounds, lithium titanate compounds, such as Li₄Ti₅O₁₂, and the like. These can be used alone, or a mixture of two or more kinds can be used. As the negative electrode active material, a silicon-containing negative electrode active material, such as silicon (elementary substance) or a silicon compound, is suitable because the use of the binder for an energy storage device of the present invention has a large effect of improving the charge and discharge cycle characteristics. The silicon-containing negative electrode active material, such as silicon (elementary substance) or a silicon compound, has an extremely large theoretical capacity compared with graphite, while it has a relatively large volume expansion rate of the negative electrode active material itself during charging. Meanwhile, with the binder for an energy storage device of the present invention, the breaking energy is high, and therefore, the volume expansion can be appropriately mitigated. Accordingly, it is considered that the charge and discharge cycle characteristics can be improved more appropriately.

Examples of the silicon-containing negative electrode active material include, but not particularly limited to, silicon (elementary substance), silicon compounds, partially-substituted products of silicon, partially-substituted products of silicon compounds, solid solutions of silicon compounds, and the like. Specific examples of the silicon compounds suitably include silicon oxides represented by SiOₓ (0.05 < x < 1.95), silicon carbides represented by SiC_{y} (0 < y < 1), silicon nitrides represented by SiN_{z} (0 < z < 4/3), silicon alloys that are alloys composed of silicon and a heterogeneous element M1, and the like. In the silicon alloys, examples of the heterogeneous element M1 suitably include at least one element selected from the group consisting of Fe, Co, Sb, Bi, Pb, Ni, Cu, Zn, Ge, In, Sn, and Ti.

The partially-substituted product of silicon is a compound in which a part of the silicon (elementary substance) and a part of silicon contained in the silicon compound is substituted with a heterogeneous element M2. Specific examples of the heterogeneous element M2 suitably include, for example, B, Mg, Ni, Ti, Mo, Co, Ca, Cr, Cu, Fe, Mn, Nb, Ta, V, W, Zn, C, N, and Sn. Among these silicon-containing negative electrode active materials, silicon (elementary substance), a silicon oxide, or a silicon alloy is preferred, and silicon (elementary substance) or a silicon oxide is further preferred.

When the electrode for an energy storage device of the present invention is a negative electrode, a conductive material may be contained in addition to the negative electrode active material. The conductive material is not particularly limited as long as it is an electron conductive material that does not cause chemical changes, and metal powder of copper, nickel, titanium, aluminum, or the like, a carbon material, and the like are preferably used. Examples of the carbon material suitably include graphite such as natural graphite (such as scaly graphite) and artificial graphite, one or more kinds of carbon black selected from acetylene black, Ketjen black, channel black, furnace black, lamp black, and thermal black, carbon nanotubes, fibrous carbon powder such as carbon fiber, and the like.

When the electrode for an energy storage device of the present invention is a positive electrode, examples of the positive electrode active material, especially of the positive electrode active material for a lithium secondary battery, include composite metal oxides with lithium containing one or more kinds selected from cobalt, manganese, and nickel. Examples of the lithium composite metal oxides include LiCoO₂, LiMn₂O₄, LiNiO₂, LiCo₁₋ₓNiₓO₂ (0.01 < x < 1), LiCo_{1/3}Ni_{1/3}Mn_{1/3}O₂, LiNi_{1/2}Mn_{3/2}O₄, LiCo_{0.98}Mg_{0.02}O₂, and the like. In addition, combinations such as LiCoO₂ with LiMn₂O₄, LiCoO₂ with LiNiO₂, and LiMn₂O₄ with LiNiO₂ may be used.

When the electrode for an energy storage device of the present invention is a positive electrode, a conductive material may be contained in addition to the positive electrode active material. The conductive material is not particularly limited as long as it is an electron conductive material that does not cause chemical changes, and examples of the carbon material suitably include graphite such as natural graphite (such as scaly graphite) and artificial graphite, one or more kinds of carbon black selected from acetylene black, Ketjen black, channel black, furnace black, lamp black, and thermal black, carbon nanotubes, fibrous carbon powder such as carbon fiber, and the like.

The electrode for an energy storage device of the present invention can be produced by mixing the binder for an energy storage device of the present invention described above, the negative electrode active material or the positive electrode active material, and the conductive material used as necessary to obtain an electrode mixture and shaping it into a sheet or the like. When the binder for an energy storage device of the present invention, the negative electrode active material or the positive electrode active material, and the conductive material used as necessary are mixed, a solvent may be used to form slurry. In this case, when a binder in a state of varnish is used as the binder for an energy storage device of the present invention, it is only necessary to form the slurry by mixing the binder with the negative electrode active material or the positive electrode active material and the conductive material used as necessary while maintaining the state of varnish. At this time, a solvent may be further added to adjust the solids concentration.

The electrode for an energy storage device of the present invention can be shaped into a sheet, for example, by casting or applying the slurry that contains the binder for an energy storage device of the present invention, the negative electrode active material or the positive electrode active material, and the conductive material used as necessary on a conductive current collector, such as aluminum foil and copper foil, performing a heat treatment to remove the solvent, and performing a pressure treatment as necessary to form an active material layer on the current collector. When a binder containing a polymer composite formed by compositing a polyimide precursor with a cyclic molecule is used as the binder for an energy storage device of the present invention, the imidization reaction may be caused to progress by heating at the time of forming the active material layer on the current collector to convert the polyimide precursor into a polyimide.

The thickness of the active material layer of the present invention may be appropriately determined according to its applications or desired capacity. Although not limited, the active material layer is preferably used in the range of, for example, 0.1 µm or more and 500 µm or less. The thickness is more preferably 1 µm or more, further preferably 10 µm or more, still more preferably 20 µm or more, more preferably 300 µm or less, further preferably 100 µm or less, and still more preferably 50 µm or less.

### <Energy storage device>

The energy storage device of the present invention includes the electrode for an energy storage device of the present invention described above. Energy storage devices include energy storage devices, such as lithium batteries, electrical double layer capacitors, and lithium-ion capacitors. Among these, lithium batteries in which lithium salts are used as electrolyte salts are preferred, and lithium secondary batteries are suitable.

The lithium secondary battery includes a positive electrode, a negative electrode, a nonaqueous electrolyte solution, and other separators, and as for the configuration, a known configuration required for the lithium secondary battery can be employed. In the present invention, as the positive electrode and/or the negative electrode, the electrode for an energy storage device of the present invention described above is used. This lithium secondary battery may be a lithium polymer battery in which a gel electrolyte is used as an electrolyte, or an all-solid-state battery in which an inorganic solid electrolyte of an oxide system, a sulfide system, or the like is used.

The nonaqueous electrolyte solution is a solution containing an electrolyte salt dissolved in a nonaqueous solvent. The nonaqueous electrolyte solution is not particularly limited, and various kinds of nonaqueous electrolyte solutions can be used.

As the electrolyte salt, a salt that is dissolved in a nonaqueous electrolyte is used, and examples of the electrolyte salt include inorganic lithium salts, such as LiPF₆, LiBF₄, LiPO₂F₂, LiN(SO₂F)₂, and LiClO₄, lithium salts containing a chain alkyl fluoride group, such as LiN(SO₂CF₃)₂, LiN(SO₂C₂F₅)₂, LiCF₃SO₃, LiC(SO₂CF₃)₃, LiPF₄(CF₃)₂, LiPF₃(C₂F₅)₃, LiPF₃(CF₃)₃, LiPF₃(iso-C₃F₇)₃, and LiPF₅(iso-C₃F₇), lithium salts containing a cyclic alkylene fluoride chain, such as (CF₂)₂(SO₂)₂NLi and (CF₂)₃(SO₂)₂NLi, and lithium salts having an oxalate complex as an anion, such as lithium bis[oxalate-O,O'] borate and lithium difluoro[oxalate-O,O'] borate.

The concentration at which the whole electrolyte salt is dissolved and used relative to the nonaqueous solvent is preferably 0.3 M or more, more preferably 0.5 M or more, and further preferably 0.7 M or more. The upper limit of the concentration is preferably 2.5 M or less, more preferably 2.0 M or less, and further preferably 1.5 M or less.

Examples of the nonaqueous solvent include cyclic carbonates, chain carbonates, chain esters, ethers, amides, phosphoric acid esters, sulfones, lactones, nitriles, S=O bond-containing compounds, and the like. The nonaqueous solvent preferably contains a cyclic carbonate. The term "chain ester" is used as a concept including a chain carbonate and a chain carboxylic acid ester.

As the cyclic carbonate, one kind or at least two kinds selected from ethylene carbonate (EC), propylene carbonate (PC), 1,2-butylene carbonate, 2,3-butylene carbonate, 4-fluoro-1,3-dioxolane-2-one (FEC), trans- or cis-4,5-difluoro-1,3-dioxolane-2-one (hereinafter, both of them are collectively referred to as "DFEC"), vinylene carbonate (VC), vinyl ethylene carbonate (VEC), and 4-ethynyl-1,3-dioxolane-2-one (EEC) are used. The proportion of the cyclic carbonate having an alkylene chain in the total cyclic carbonates is preferably 55 volume% to 100 volume%, further preferably 60 volume% or more, and further preferably 90 volume% or less.

Further, the nonaqueous solvent is preferably mixed and used to achieve adequate physical properties. Examples of its combination include a combination of a cyclic carbonate and a chain ester, and the like. As the chain ester, for example, one kind or at least two kinds of asymmetric chain carbonates selected from methylethyl carbonate (MEC), methylpropyl carbonate (MPC), methylisopropyl carbonate (MIPC), methylbutyl carbonate, and ethylpropyl carbonate, one kind or at least two kinds of symmetric chain carbonates selected from dimethyl carbonate (DMC), diethyl carbonate (DEC), dipropyl carbonate, and dibutyl carbonate, pivalic acid esters such as methyl pivalate, ethyl pivalate, and propyl pivalate, and one kind or at least two kinds of chain carboxylic acid esters selected from methyl propionate, ethyl propionate, propyl propionate, methyl acetate, and ethyl acetate (EA) are suitably used.

### EXAMPLES

Hereinafter, the present invention will be more specifically described by way of Examples and Comparative Examples, but the present invention is not limited to these.

Abbreviations of compounds used in Examples below are shown below:
H"-PMDA: (1R,2S,4S,5R)-cyclohexanetetracarboxylic dianhydride
CBDA: 1,2,3,4-cyclobutanetetracarboxylic dianhydride
PMDA: Pyromellitic dianhydride
ODA: 4,4'-diaminodiphenyl ether
DABAN: 4,4'-diaminobenzanilide
TPE-R: 1,3-bis(4-aminophenoxy)benzene
α-CD: α-cyclodextrin

### <Example 1>

### [Production of polymer composite solution]

193.9311 g of N-methylpyrrolidone (NMP), 11.0689 g of 18-crown-6, 16.7726 g of ODA, and 4.7585 g of DABAN were put into a reaction container equipped with a stirrer and a nitrogen inlet pipe and stirred at 50°C for 2 hours under a nitrogen atmosphere, then 23.4689 g of H"-PMDA was added to perform a reaction and form a polyimide precursor, thereby a polymer composite solution was obtained. At this time, the molar ratio of H"-PMDA:ODA:DABAN was 100:80:20, and the amount of 18-crown-6 was 20 mol% relative to a total of 100 mol% of amide acid groups and imide groups contained in the polyimide precursor.

### [TGA measurement]

Using a thermogravimetric measuring device (product name "TG-DTA2000S" available from Bruker AXS), the prepared polymer composite solution was heated up to 500°C from room temperature at a heating rate of 20°C/min, and the weight of the polymer composite solution at the time of reaching 350°C was measured. The residual rate of 18-crown-6 as a cyclic molecule at the time of reaching 350°C relative to the input amount of 18-crown-6 was calculated according to the following formula. The result is shown in Table 1. Residual rate [weight%] = ((weight at 350°C [g]) - (theoretical weight value when 18-crown-6 completely volatilizes [g]))/((theoretical weight value when 18-crown-6 does not volatilize at all [g]) - (theoretical weight value when 18-crown-6 completely volatilizes [g])) × 100

### [IR measurement]

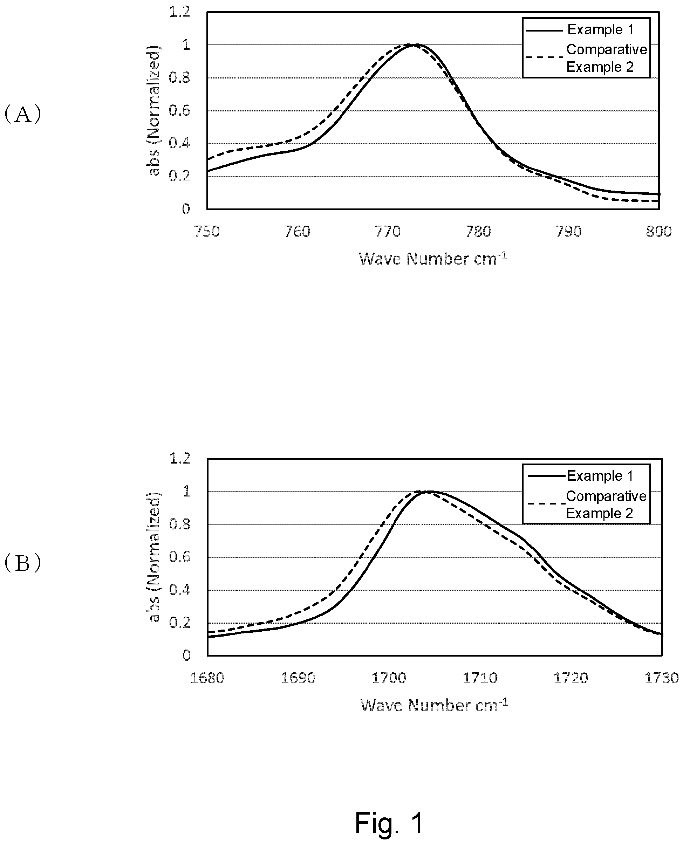

The polymer composite solution prepared as above was applied onto an alkali-free glass wafer by spin coating, and the workpiece was heated for 10 minutes at each of 120°C, 150°C, 200°C, 250°C, and 300°C to remove the solvent and perform imidization. Thus, a polymer composite film having a thickness of 10 µm was obtained. Then, the obtained polymer composite film was used to perform an IR measurement using an IR measuring device (product name "FT/IR-4100" available from JASCO Corporation). The results are shown in FIG. 1.

### [Mechanical strength measurement]

The polymer composite solution prepared as above was applied onto an alkali-free glass wafer by spin coating, and the workpiece was heated for 10 minutes at each of 120°C, 150°C, 200°C, 250°C, and 350°C to remove the solvent and perform imidization. Thus, a polymer composite film having a thickness of 10 µm was obtained. Then, the obtained polymer composite film was used to measure elastic modulus, elongation rate, and breaking energy using a tensile tester measuring device (product name "TENSILON (registered trademark) RTG-1350" available from A&D Company, Limited). The results are shown in Table 2.

### [Fabrication of negative electrode sheet]

The polymer composite solution prepared as above, silicon elementary substance (Si), and acetylene black were mixed such that the weight ratio of silicon elementary substance (Si):polymer composite:acetylene black was 60:30: 10, thereby a negative electrode mixture paste was obtained. This negative electrode mixture paste was applied on one side of nickel-plated steel foil (the current collector), dried at 110°C for 1 minute, then subjected to a pressure treatment, heated up to 360°C from room temperature at a constant rate for 1.5 hours, heated at 360°C for 1.5 hours, and then allowed to cool. Thus, the solvent was removed, and imidization was performed. The workpiece was punched in a predetermined size, thereby fabricating a negative electrode sheet having a thickness of 20 µm with the current collector being 10 µm.

### [Fabrication of battery]

By opposing the negative electrode sheet obtained as above to metallic lithium via a glass filter (GA-100 available from ADVANTEC CO.,LTD.), adding a nonaqueous electrolyte solution, and sealing them, a 2032-type coin battery was fabricated. The nonaqueous electrolyte solution used was a solution in which LiPF₆ was dissolved as an electrolyte salt in a nonaqueous solvent such that the concentration was 1 M. In the nonaqueous solvent, the volume ratio of ethylene carbonate (EC):diethyl carbonate (DEC) was 1:1, and a 1% by weight vinylene carbonate was added.

### [Evaluation of battery characteristics]

In a constant temperature bath at 30°C, a constant-current charge was performed on the coin-type battery fabricated as above up to 0.001 V at 0.1 C with a direction where Li was occluded in the negative electrode sheet as charging, and a constant-current discharge that caused the coin-type battery to discharge to 1 V at 0.1 C was performed. Then, the initial efficiency was obtained according to [initial efficiency [%] = discharge capacity [mAh]/charge capacity [mAh] × 100]. Next, a cycle test was performed by repeating charging and discharging under the above conditions. The results of the cycle test were obtained as rates relative to the initial discharge capacity. The results are shown in Table 3. Note that C in 0.1 C represents a current value at the time of charging and discharging. For example, 1 C refers to a current value that allows complete discharging (or full charging) of the theoretical capacity in 1/1 hour, and 0.1 C refers to a current value that allows complete discharging (or full charging) of the theoretical capacity in 1/0.1 hour.

### <Comparative Example 1>

205.0000 g of N-methylpyrrolidone (NMP), 16.7726 g of ODA, and 4.7585 g of DABAN were put into a reaction container equipped with a stirrer and a nitrogen inlet pipe and stirred at 50°C for 30 minutes under a nitrogen atmosphere, then 23.4689 g of H"-PMDA was added to perform a reaction and form a polyimide precursor, thereby a polyimide precursor solution was obtained. At this time, the molar ratio of H"-PMDA:ODA:DABAN was 100:80:20. Next, 11.0689 g of 18-crown-6 was added to the prepared polyimide precursor solution and mixed with it under the atmosphere at room temperature, thereby a mixed solution of the polyimide precursor and 18-crown-6 was obtained. The amount of 18-crown-6 was 20 mol% relative to a total of 100 mol% of amide acid groups and imide groups contained in the polyimide precursor. Then, using the prepared mixed solution, a TGA measurement was performed similarly to Example 1 to measure the residual rate of 18-crown-6 as a cyclic molecule at the time of reaching 350°C. The result is shown in Table 1.

### <Comparative Example 2>

205.0000 g of N-methylpyrrolidone (NMP), 16.7726 g of ODA, and 4.7585 g of DABAN were put into a reaction container equipped with a stirrer and a nitrogen inlet pipe and stirred at 50°C for 30 minutes under a nitrogen atmosphere, then 23.4689 g of H"-PMDA was added to perform a reaction and form a polyimide precursor, thereby a polyimide precursor solution was obtained. At this time, the molar ratio of H"-PMDA:ODA:DABAN was 100:80:20. Then, using the prepared polyimide precursor solution, an IR measurement, a mechanical strength measurement, and the evaluation of battery characteristics were performed similarly to Example 1. The results are shown in FIG. 1 and Tables 2 and 3.

### <Example 2>

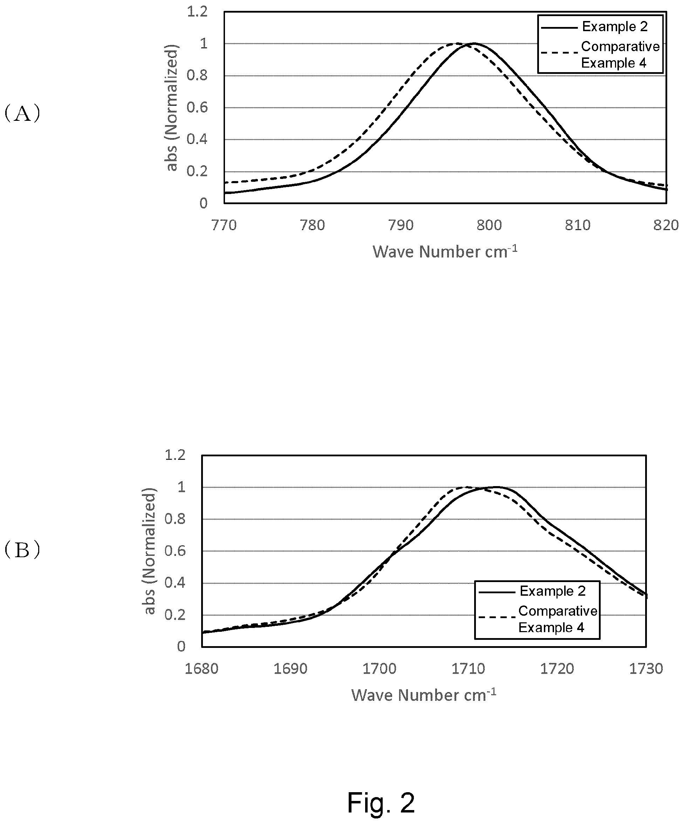

206.2725 g of N-methylpyrrolidone (NMP), 8.7275 g of 18-crown-6, 7.2400 g of TPE-R, and 11.5716 g of ODA were put into a reaction container equipped with a stirrer and a nitrogen inlet pipe and stirred at 50°C for 2 hours under a nitrogen atmosphere, then 16.1883 g of CBDA was added to perform a reaction and form a polyimide precursor, thereby a polymer composite solution was obtained. At this time, the molar ratio of CBDA:TPE-R:ODA was 100:30:70, and the amount of 18-crown-6 was 20 mol% relative to a total of 100 mol% of amide acid groups and imide groups contained in the polyimide precursor. Then, using the prepared polymer composite solution, a TGA measurement was performed similarly to Example 1 to measure the residual rate of 18-crown-6 as a cyclic molecule at the time of reaching 350°C. In addition, an IR measurement, a mechanical strength measurement, and the evaluation of battery characteristics were performed similarly to Example 1. The results are shown in Table 1, FIG. 2, and Tables 2 and 3.

### <Comparative Example 3>

215.0000 g of N-methylpyrrolidone (NMP), 7.2400 g of TPE-R, and 11.5716 g of ODA were put into a reaction container equipped with a stirrer and a nitrogen inlet pipe and stirred at 50°C for 30 minutes under a nitrogen atmosphere, then 16.1883 g of CBDA was added to perform a reaction and form a polyimide precursor, thereby a polyimide precursor solution was obtained. At this time, the molar ratio of CBDA:TPE-R:ODA was 100:30:70. Next, 8.7275 g of 18-crown-6 was added to the prepared polyimide precursor solution and mixed with it under the atmosphere at room temperature, thereby a mixed solution of the polyimide precursor and 18-crown-6 was obtained. The amount of 18-crown-6 was 20 mol% relative to a total of 100 mol% of amide acid groups and imide groups contained in the polyimide precursor. Then, using the prepared mixed solution, a TGA measurement was performed similarly to Example 1 to measure the residual rate of 18-crown-6 as a cyclic molecule at the time of reaching 350°C. The result is shown in Table 1.

In addition, in Comparative Example 3, the polyimide precursor solution prepared as above (a solution before the addition of 18-crown-6), silicon elementary substance (Si), and acetylene black were mixed such that the weight ratio of silicon elementary substance (Si):polyimide precursor: acetylene black was 60:30:10. Then, 18-crown-6 was added to the mixture and mixed with it under the atmosphere at room temperature, thereby a negative electrode mixture paste was obtained. The amount of 18-crown-6 was 20 mol% relative to a total of 100 mol% of amide acid groups and imide groups contained in the polyimide precursor. Then, using the obtained negative electrode mixture paste, the evaluation of battery characteristics was performed similarly to Example 1. The results are shown in Table 3. Note that, using the obtained negative electrode mixture paste, a TGA measurement was performed similarly to Example 1 to measure the residual rate of 18-crown-6 as a cyclic molecule at the time of reaching 360°C, and the result was 8.79% by weight.

### <Comparative Example 4>

215.0000 g of N-methylpyrrolidone (NMP), 7.2400 g of TPE-R, and 11.5716 g of ODA were put into a reaction container equipped with a stirrer and a nitrogen inlet pipe and stirred at 50°C for 30 minutes under a nitrogen atmosphere, then 16.1883 g of CBDA was added to perform a reaction and form a polyimide precursor, thereby a polyimide precursor solution was obtained. At this time, the molar ratio of CBDA:TPE-R:ODA was 100:30:70. Then, using the prepared polyimide precursor solution, an IR measurement, a mechanical strength measurement, and the evaluation of battery characteristics were performed similarly to Example 1. The results are shown in FIG. 2 and Tables 2 and 3.

### <Example 3>

215.0000 g of N-methylpyrrolidone (NMP), 8.8448 g of 18-crown-6, and 16.7530 g of ODA were put into a reaction container equipped with a stirrer and a nitrogen inlet pipe and stirred at 50°C for 2 hours under a nitrogen atmosphere, then 18.2470 g of PMDA was added to perform a reaction and form a polyimide precursor, thereby a polymer composite solution was obtained. At this time, the molar ratio of PMDA:ODA was 100:100, and the amount of 18-crown-6 was 20 mol% relative to a total of 100 mol% of amide acid groups and imide groups contained in the polyimide precursor. Then, using the prepared polymer composite solution, a TGA measurement was performed similarly to Example 1 to measure the residual rate of 18-crown-6 as a cyclic molecule at the time of reaching 350°C. In addition, a mechanical strength measurement and the evaluation of battery characteristics were performed similarly to Example 1. The results are shown in Tables 1, 2, and 3. In Example 3, when a negative electrode sheet was produced, the weight ratio of silicon elementary substance (Si):polymer composite:acetylene black was 60:25:15, and the cycle test in the evaluation of battery characteristics was performed at 0.1 C for both charging and discharging at the first and second cycles and at 0.5 C for both charging and discharging at the third and subsequent cycles.

### <Comparative Example 5>

215.0000 g of N-methylpyrrolidone (NMP) and 16.7530 g of ODA were put into a reaction container equipped with a stirrer and a nitrogen inlet pipe and stirred at 50°C for 30 minutes under a nitrogen atmosphere, then 18.2470 g of PMDA was added to perform a reaction and form a polyimide precursor, thereby a polyimide precursor solution was obtained. At this time, the molar ratio of PMDA:ODA was 100:100. Next, 8.8448 g of 18-crown-6 was added to the prepared polyimide precursor solution and mixed with it under the atmosphere at room temperature, thereby a mixed solution of the polyimide precursor and 18-crown-6 was obtained. The amount of 18-crown-6 was 20 mol% relative to a total of 100 mol% of amide acid groups and imide groups contained in the polyimide precursor. Then, using the prepared mixed solution, a TGA measurement was performed similarly to Example 1 to measure the residual rate of 18-crown-6 as a cyclic molecule at the time of reaching 350°C. The result is shown in Table 1.

### <Comparative Example 6>

215.0000 g of N-methylpyrrolidone (NMP) and 16.7530 g of ODA were put into a reaction container equipped with a stirrer and a nitrogen inlet pipe and stirred at 50°C for 30 minutes under a nitrogen atmosphere, then 18.2470 g of PMDA was added to perform a reaction and form a polyimide precursor, thereby a polyimide precursor solution was obtained. At this time, the molar ratio of PMDA:ODA was 100:100. Then, using the prepared polyimide precursor solution, a mechanical strength measurement and the evaluation of battery characteristics were performed similarly to Example 1. The results are shown in Tables 2 and 3. In Comparative Example 6, similarly to Example 3, when a negative electrode sheet was produced, the weight ratio of silicon elementary substance (Si):polymer composite:acetylene black was 60:25:15, and the cycle test in the evaluation of battery characteristics was performed at 0.1 C for both charging and discharging at the first and second cycles and at 0.5 C for both charging and discharging at the third and subsequent cycles.

### <Example 4>

187.4648 g of N-methylpyrrolidone (NMP), 12.5352 g of 18-crown-6, and 23.7610 g of ODA were put into a reaction container equipped with a stirrer and a nitrogen inlet pipe and stirred at 50°C for 2 hours under a nitrogen atmosphere, then 13.2990 g of H"-PMDA and 12.9400 g of PMDA were added to perform a reaction and form a polyimide precursor, thereby a polymer composite solution was obtained. At this time, the molar ratio of H"-PMDA:PMDA:ODA was 50:50:100, and the amount of 18-crown-6 was 20 mol% relative to a total of 100 mol% of amide acid groups and imide groups contained in the polyimide precursor. Then, using the prepared polymer composite solution, a TGA measurement was performed similarly to Example 1 to measure the residual rate of 18-crown-6 as a cyclic molecule at the time of reaching 350°C. In addition, a mechanical strength measurement and the evaluation of battery characteristics were performed similarly to Example 1. The results are shown in Tables 1, 2, and 3.

### <Comparative Example 7>

200.0000 g of N-methylpyrrolidone (NMP) and 23.7610 g of ODA were put into a reaction container equipped with a stirrer and a nitrogen inlet pipe and stirred at 50°C for 0.5 hours under a nitrogen atmosphere, then 13.2990 g of H"-PMDA and 12.9400 g of PMDA were added to perform a reaction and form a polyimide precursor, thereby a polyimide precursor solution was obtained. At this time, the molar ratio of H"-PMDA:PMDA:ODA was 50:50:100. Then, using the prepared polyimide precursor solution, a mechanical strength measurement and the evaluation of battery characteristics were performed similarly to Example 1. The results are shown in Tables 2 and 3.

### <Example 5>

198.9388 g of N-methylpyrrolidone (NMP), 16.0612 g of α-CD, 7.2400 g of TPE-R, and 11.5716 g of ODA were put into a reaction container equipped with a stirrer and a nitrogen inlet pipe and stirred at 50°C for 2 hours under a nitrogen atmosphere, then 16.1883 g of CBDA was added to perform a reaction and form a polyimide precursor, thereby a polymer composite solution was obtained. At this time, the molar ratio of CBDA:TPE-R:ODA was 100:30:70, and the amount of α-CD was 10 mol% relative to a total of 100 mol% of amide acid groups and imide groups contained in the polyimide precursor. Then, using the prepared polymer composite solution, a TGA measurement was performed similarly to Example 1. In addition, the evaluation of battery characteristics was performed similarly to Example 1. The results are shown in Tables 1 and 3.

In Example 5, in the TGA measurement, similarly to the case where 18-crown-6 was used as a cyclic molecule, the measurement was performed at 350°C to obtain the residual rate of α-CD. Meanwhile, with α-CD alone, when the TGA measurement was performed up to 600°C, components carbonized without volatilizing were present in an amount of about 10% by weight. Therefore, in Example 5, the TGA measurement at 350°C is estimated to result in a value that is about 10% by weight lower than the measured result shown in Table 1. In addition, for the evaluation of battery characteristics, in Example 5, when a negative electrode sheet was produced, the weight ratio of silicon oxide:polymer composite:acetylene black was 80:15:5, and the discharge voltage was 1.5 V for the cycle test.

### <Comparative Example 8>

215.0000 g of N-methylpyrrolidone (NMP), 7.2400 g of TPE-R, and 11.5716 g of ODA were put into a reaction container equipped with a stirrer and a nitrogen inlet pipe and stirred at 50°C for 0.5 hours under a nitrogen atmosphere, then 16.1883 g of CBDA was added to perform a reaction and form a polyimide precursor, thereby a polyimide precursor solution was obtained. At this time, the molar ratio of CBDA:TPE-R:ODA was 100:30:70. Next, the prepared polyimide precursor solution, a silicon oxide, and acetylene black were mixed such that the weight ratio of silicon oxide:polyimide precursor:acetylene black was 80:15:5. Then, α-CD was added to the mixture and mixed with it under the atmosphere at room temperature, thereby a negative electrode mixture paste was obtained. The amount of α-CD was 10 mol% relative to a total of 100 mol% of amide acid groups and imide groups contained in the polyimide precursor. Then, using the obtained negative electrode mixture paste, the evaluation of battery characteristics was performed similarly to Example 1. The results are shown in Table 3. In Comparative Example 8, the discharge voltage was 1.5 V for the cycle test in the evaluation of battery characteristics.

### <Comparative Example 9>

215.0000 g of N-methylpyrrolidone (NMP), 7.2400 g of TPE-R, and 11.5716 g of ODA were put into a reaction container equipped with a stirrer and a nitrogen inlet pipe and stirred at 50°C for 0.5 hours under a nitrogen atmosphere, then 16.1883 g of CBDA was added to perform a reaction and form a polyimide precursor, thereby a polyimide precursor solution was obtained. At this time, the molar ratio of CBDA:TPE-R:ODA was 100:30:70. Then, using the prepared polyimide precursor solution, the evaluation of battery characteristics was performed similarly to Example 1. The results are shown in Table 3. In Comparative Example 8, when a negative electrode sheet was produced, the weight ratio of silicon oxide:polyimide:acetylene black was 80:15:5, and the discharge voltage was 1.5 V for the cycle test in the evaluation of battery characteristics.

### [Table 1]

**Table 1**

| | Polyimide/polyimide precursor | Cyclic molecule | Form of presence | Residual rate of cyclic molecule at 350°C (weight%) |
|---|---|---|---|---|
| Example 1 | H"-PMDA/ODA/DABAN | 18-crown-6 | Polymer composite | 45.5 |
| Comparative Example 1 | H"-PMDA/ODA/DABAN | 18-crown-6 | Mixture | 7.1 |
| Example 2 | CBDA/TPE-R/ODA | 18-crown-6 | Polymer composite | 20.0 |
| Comparative Example 3 | CBDA/TPE-R/ODA | 18-crown-6 | Mixture | 0 |
| Example 3 | PMDA/ODA | 18-crown-6 | Polymer composite | 91.2 |
| Comparative Example 5 | PMDA/ODA | 18-crown-6 | Mixture | 0 |
| Example 4 | H"-PMDA/PMDA/ODA | 18-crown-6 | Polymer composite | 28.0 |
| Example 5 | CBDA/TPE-R/ODA | α-CD | Polymer composite | 25.0 |

### [Table 2]

**Table 2**

| | Polyimide/polyimide precursor | Cyclic molecule | Form of presence | Elastic modulus (GPa) | Elongation rate (%) | Breaking energy (MJ/m³) |
|---|---|---|---|---|---|---|
| Example 1 | H"-PMDA/ODA/DABAN | 18-crown-6 | Polymer composite | 3.2 | 97 | 136 |
| Comparative Example 2 | H"-PMDA/ODA/DABAN | - | - | 2.9 | 87.4 | 112 |
| Example 2 | CBDA/TPE-R/ODA | 18-crown-6 | Polymer composite | 3.5 | 78.8 | 101.2 |
| Comparative Example 4 | CBDA/TPE-R/ODA | - | - | 3.8 | 65 | 92.9 |
| Example 3 | PMDA/ODA | 18-crown-6 | Polymer composite | 1.2 | 83 | 116 |
| Comparative Example 6 | PMDA/ODA | - | - | 1.3 | 53 | 63 |
| Example 4 | H"-PMDA/PMDA/ODA | 18-crown-6 | Polymer composite | 3.0 | 92 | 136 |
| Comparative Example 7 | H"-PMDA/PMDA/ODA | - | - | 2.7 | 49.7 | 62 |

### [Table 3]

**Table 3**

| | Polyimide/polyimide precursor | Cyclic molecule | Form of presence | Initial efficiency (%) | 10th cycle capacity retention rate (%) | 30th cycle capacity retention rate (%) | 80th cycle capacity retention rate (%) |
|---|---|---|---|---|---|---|---|
| Example 1 | H"-PMDA/ODA/DABAN | 18-crown-6 | Polymer composite | 86.5 | 97.5 | 86.9 | Not measured |
| Comparative Example 2 | H"-PMDA/ODA/DABAN | - | - | 87 | 95.3 | 83.6 | Not measured |
| Example 2 | CBDA/TPE-R/ODA | 18-crown-6 | Polymer composite | 85.2 | 94.6 | 83.6 | 62.7 |
| Comparative Example 3 | CBDA/TPE-R/ODA | 18-crown-6 | Mixture | 84.2 | 89.9 | 77.3 | Not measured |
| Comparative Example 4 | CBDA/TPE-R/ODA | - | - | 85.9 | 94.3 | 83.6 | 60.9 |
| Example 3 | PMDA/ODA | 18-crown-6 | Polymer composite | 79.1 | 44.2 | 28.7 | Not measured |
| Comparative Example 6 | PMDA/ODA | - | - | 75.8 | 5.6 | 0.5 | Not measured |
| Example 4 | H"-PMDA/PMDA/ODA | 18-crown-6 | Polymer composite | 82.8 | 95.3 | 81.4 | 64.2 |
| Comparative Example 7 | H"-PMDA/PMDA/ODA | - | - | 82.5 | 94.6 | 81.9 | 62.7 |
| Example 5 | CBDA/TPE-R/ODA | α-CD | Polymer composite | 83.7 | 89.8 | 73.1 | Not measured |
| Comparative Example 8 | CBDA/TPE-R/ODA | α-CD | Mixture | 82.0 | 61.2 | 45.7 | Not measured |
| Comparative Example 9 | CBDA/TPE-R/ODA | - | - | 83.6 | 85.8 | 69.2 | Not measured |

### <Evaluation about TGA measurement>

As is evident from the results in Table 1, in Examples 1 to 5, where tetracarboxylic acid and diamine components were reacted in the presence of 18-crown-6 as a cyclic molecule to form a polyimide precursor, a considerable amount of 18-crown-6 (boiling point: 190°C) or *α*-CD remained even when heated to 350°C, and at least a part of the polyimide precursor or a polyimide and at least a part of 18-crown-6 or α-CD as a cyclic molecule were composited to form a polymer composite.

In contrast to this, in Comparative Examples 1, 3, and 5, where 18-crown-6 as a cyclic molecule was mixed with a polyimide precursor, 18-crown-6 hardly remained when heated to 350°C. It can be said that the polyimide precursor and 18-crown-6 as a cyclic molecule were not composited.

As described above, as in Comparative Examples 1, 3, and 5, in a case where 18-crown-6 as a cyclic molecule was mixed with the polyimide precursor, 18-crown-6 as a cyclic molecule hardly remained when an imidization reaction was performed at a temperature between 300°C and 350°C. Therefore, the mechanical strength measurement and the battery characteristics were evaluated appropriately in a state of a polyimide precursor solution without mixing 18-crown-6 as a cyclic molecule as described in Comparative Examples 2, 4, 6, and 7. That is, as in Comparative Examples 1, 3, and 5 described above, the results were considered to be the same between when 18-crown-6 as a cyclic molecule was mixed with the polyimide precursor and when 18-crown-6 as a cyclic molecule was not mixed with the polyimide precursor. Therefore, as described in Comparative Examples 2, 4, 6, and 7, the evaluation was performed in the state of the polyimide precursor solution without mixing 18-crown-6 as a cyclic molecule.

### <Evaluation about IR measurement>

FIG. 1 illustrates IR spectra for Example 1 and Comparative Example 2 (FIG. 1(A) illustrates the spectra from 750 cm⁻¹ to 800 cm⁻¹, and FIG. 1(B) illustrates the spectra from 1680 cm⁻¹ to 1730 cm⁻¹). FIG. 2 illustrates IR spectra for Example 2 and Comparative Example 4 (FIG. 2(A) illustrates the spectra from 770 cm⁻¹ to 820 cm⁻¹, and FIG. 2(B) illustrates the spectra from 1680 cm⁻¹ to 1730 cm⁻¹). As is also evident from FIG. 1 and FIG. 2, peak shifts specific to the polyimide precursor and the polyimide were observed by compositing at least a part of the polyimide precursor or the polyimide with at least a part of 18-crown-6 as a cyclic molecule.

### <Evaluation about mechanical strength measurement>

As is also evident from the results in Table 2, Examples 1 to 4 resulted in high breaking energy by compositing at least a part of the polyimide precursor or the polyimide with at least a part of 18-crown-6 as a cyclic molecule to form a polymer composite.

### <Evaluation about battery characteristics>

As is also evident from the results in Table 3, Examples 1 to 5 resulted in achieving excellent charge and discharge cycle characteristics by compositing at least a part of the polyimide precursor or the polyimide with at least a part of 18-crown-6 or α-CD as a cyclic molecule to form a polymer composite compared with a case where a polymer composite was not formed.

On the other hand, Comparative Examples 3 and 8, where 18-crown-6 or α-CD as a cyclic molecule was mixed with the polyimide precursor, resulted in exhibiting inferior charge and discharge cycle characteristics compared with Comparative Examples 4 and 9, where a cyclic molecule was not mixed. From the results, it can be said that the cyclic molecule was not composited in Comparative Example 8, where α-CD was mixed, similarly to Comparative Example 3, where 18-crown-6 as a cyclic molecule was mixed.

### Industrial Applicability

The binder for an energy storage device of the present invention is suitably used for the production of an energy storage device.

## Claims

1. A binder for an energy storage device comprising a polymer composite formed by compositing a polyimide precursor and/or a polyimide with a cyclic molecule having a plurality of ether bonds, the polyimide precursor containing a reactant of a tetracarboxylic acid component and a diamine component, the polyimide being obtained by imidizing a part or all of the polyimide precursor.

2. The binder for an energy storage device according to claim 1, wherein the cyclic molecule is at least one kind selected from cyclodextrin, crown ether, and thiocrown ether.

3. The binder for an energy storage device according to claim 1 or 2, wherein a proportion of the cyclic molecule contained in the binder is 4 mol% or more and 25 mol% or less relative to a total of 100 mol% of an amide acid group and an imide group contained in the polyimide precursor and/or the polyimide obtained by imidizing a part or all of the polyimide precursor.

4. The binder for an energy storage device according to claim 1 or 2, wherein a proportion of an alicyclic tetracarboxylic dianhydride in 100 mol% of the tetracarboxylic acid component is 35 mol% or more.

5. The binder for an energy storage device according to claim 1 or 2, wherein the polymer composite is prepared by reacting the tetracarboxylic acid component with the diamine component in presence of the cyclic molecule.

6. A varnish comprising the binder for an energy storage device according to claim 1 or 2.

7. An electrode for an energy storage device comprising the binder for an energy storage device according to claim 1 or 2 and an active material.

8. The electrode for an energy storage device according to claim 7, wherein the active material is a silicon-containing negative electrode active material.

9. An energy storage device comprising the electrode according to claim 7.

10. A method for producing the binder for an energy storage device according to claim 1 or 2, the production method comprising
forming a polyimide precursor by reacting a tetracarboxylic acid component with a diamine component in presence of a cyclic molecule having a plurality of ether bonds.

11. A polymer composite formed by compositing a polyimide precursor and/or a polyimide with a cyclic molecule having a plurality of ether bonds, the polyimide precursor containing a reactant of a tetracarboxylic acid component and a diamine component, the polyimide being obtained by imidizing a part or all of the polyimide precursor, wherein
a proportion of an alicyclic tetracarboxylic dianhydride in 100 mol% of the tetracarboxylic acid component is 35 mol% or more.
